# FASCICULE DE BREVET EUROPEEN

(11) **EP 4 187 126 B1**
(45) Date de publication et mention de la délivrance du brevet: **11.09.2024**
(21) Numéro de dépôt: 22209483.1
(22) Date de dépôt: 24.11.2022
(51) Int. Cl.: F16H 1/46, F16H 57/00, F16H 57/08, E06B 9/72, F16H 57/021, F16H 1/28

(54) **SYSTÈME RÉDUCTEUR À ENGRENAGES ET BAGUES DENTÉES POUR UN MOTEUR D'UN ENSEMBLE OCCULTANT OÙ LE SYSTÈME RÉDUCTEUR PRÉSENTE UN BRUIT DE FONCTIONNEMENT RÉDUIT**
ZAHNRAD- UND ZAHNRADUNTERSETZUNGSGETRIEBE FÜR EINEN MOTOR EINER JALOUSIEANORDNUNG, WOBEI DAS UNTERSETZUNGSGETRIEBE MIT REDUZIERTEM BETRIEBSGERÄUSCH AUFWEIST
REDUCTION GEAR SYSTEM AND TOOTHED RINGS FOR A MOTOR OF A SHADE ASSEMBLY, WHEREIN THE REDUCTION SYSTEM HAS A REDUCED OPERATING NOISE

(30) Priorité: 25.11.2021 FR 2112545
(43) Date de publication de la demande: 31.05.2023
(73) Titulaire: Delta Dore, 35270 Bonnemain (FR)
(72) Inventeur: SCHRAEN, Maxime, 35270 BONNEMAIN (FR); LE BER, Christophe, 35270 BONNEMAIN (FR); EVEN, Nicolas, 35270 BONNEMAIN (FR)
(74) Mandataire: Cabinet Le Guen Maillet

(56) Documents cités:
- EP-A2- 2 103 844
- EP-B1- 0 666 968
- CN-A- 113 531 060
- US-A1- 2018 209 512
- US-B2- 10 180 029

## Description

### DOMAINE TECHNIQUE

La présente invention concerne un système réducteur à engrenages pour un moteur d'un système occultant comme un volet roulant, où le système réducteur présente un mécanisme particulier permettant une réduction du bruit lors de son fonctionnement. L'invention concerne également un ensemble motorisé comportant un tel système réducteur et un système occultant comportant un tel ensemble motorisé.

### ÉTAT DE LA TECHNIQUE ANTÉRIEURE

Un système occultant de l'état de la technique, par exemple un volet roulant ou un store banne, comporte classiquement un moteur tubulaire, un tube d'enroulement entraîné en rotation par le moteur tubulaire et un tablier ou une toile qui s'enroule autour du tube d'enroulement.

Le moteur tubulaire comprend entre autres un moteur avec un arbre moteur, un système réducteur avec une entrée qui est l'arbre moteur et un arbre de sortie, et un tube moteur dans lequel le moteur et le système réducteur sont logés. Le tube moteur est lui-même logé dans le tube d'enroulement qui est entraîné en rotation par l'arbre de sortie. Le document US 10 180 029 divulgue un système occultant de l'état de la technique.

Le système réducteur est classiquement constitué de trois étages de réduction réalisés par des engrenages et un tel réducteur mécanique est alors relativement bruyant.

### EXPOSÉ DE L'INVENTION

Un objet de la présente invention est ainsi de proposer un système réducteur à engrenages qui soit moins bruyant.

À cet effet, est proposé un système réducteur comportant :
- un corps présentant un axe longitudinal avec, à une première extrémité, un coupleur destiné à être connecté à un arbre moteur d'un moteur, et, à une deuxième extrémité, un arbre de sortie, où le coupleur et l'arbre de sortie sont montés mobiles en rotation par rapport au corps autour de l'axe longitudinal, où le corps comporte un fût avec une face intérieure,
- un premier train épicycloïdal comportant un pignon planétaire d'entrée solidaire du coupleur, un premier porte-satellites sous la forme d'un premier plateau circulaire sur lequel sont montés mobiles en rotation une pluralité de premiers satellites où chacun engrène avec le pignon planétaire d'entrée, et des premières dents qui engrènent avec les premiers satellites et qui sont disposées sur la face intérieure du fût qui constitue une couronne planétaire,
- un deuxième train épicycloïdal comportant un pignon planétaire intermédiaire solidaire du premier porte-satellites, un deuxième porte-satellites sous la forme d'un deuxième plateau circulaire sur lequel sont montés mobiles en rotation une pluralité de deuxièmes satellites où chacun engrène avec le pignon planétaire intermédiaire, et des deuxièmes dents qui engrènent avec les deuxièmes satellites et qui sont disposées sur la face intérieure du fût qui constitue une couronne planétaire,
- un troisième train épicycloïdal comportant un pignon planétaire de sortie solidaire du deuxième porte-satellites, un troisième porte-satellites sur lequel sont montés mobiles en rotation une pluralité de troisièmes satellites où chacun engrène avec le pignon planétaire de sortie, et des troisièmes dents qui engrènent avec les troisièmes satellites et qui sont disposées sur la face intérieure du fût qui constitue une couronne planétaire, où l'arbre de sortie est solidaire du troisième porte-satellites, et
- une première bague dentée présentant un trou central dans lequel s'emmanche le premier plateau circulaire et comportant sur la périphérie extérieure de la première bague dentée, des dents qui coopèrent avec les deuxièmes dents.

La présence de la bague dentée permet de limiter les mouvements parasites du premier plateau circulaire et donc le bruit.

Avantageusement, le système réducteur comporte une deuxième bague dentée présentant un trou central dans lequel s'emmanche le deuxième plateau circulaire et comportant sur la périphérie extérieure de la deuxième bague dentée, des dents qui coopèrent avec les deuxièmes dents ou les troisièmes dents.

Avantageusement, le diamètre extérieur de chaque plateau circulaire et le diamètre du trou central de la bague dentée associée présentent un ajustement avec jeu.

Avantageusement, au moins un des portes-satellites comporte une cage, chaque satellite est solidaire d'un plot coaxial avec ledit satellite, et chaque satellite et son plot sont montés mobiles en rotation et flottant dans la cage.

L'invention propose également un ensemble motorisé comportant un moteur avec un arbre moteur et un système réducteur selon l'une des variantes précédentes, où l'arbre moteur est connecté au coupleur et l'entraîne en rotation.

L'invention propose également un système occultant comportant un tablier, un tube d'enroulement autour duquel le tablier s'enroule, un moteur tubulaire logé dans le tube d'enroulement et qui comprend un tube moteur et un ensemble motorisé selon la variante précédente logé dans le tube moteur, et où l'arbre de sortie entraîne le tube d'enroulement en rotation.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue en perspective d'un système réducteur selon l'invention,
Fig. 2 est une vue en perspective d'un système réducteur selon un premier mode de réalisation de l'invention sans le capotage,
Fig. 3 est une vue en coupe par un plan axial du système réducteur de la Fig. 2,
Fig. 4 est une vue en perspective d'un système réducteur selon un premier mode de réalisation de l'invention sans le capotage, et
Fig. 5 est une vue en perspective d'un système occultant comprenant un système réducteur selon l'invention.

### EXPOSÉ DÉTAILLÉ DE MODES DE RÉALISATION

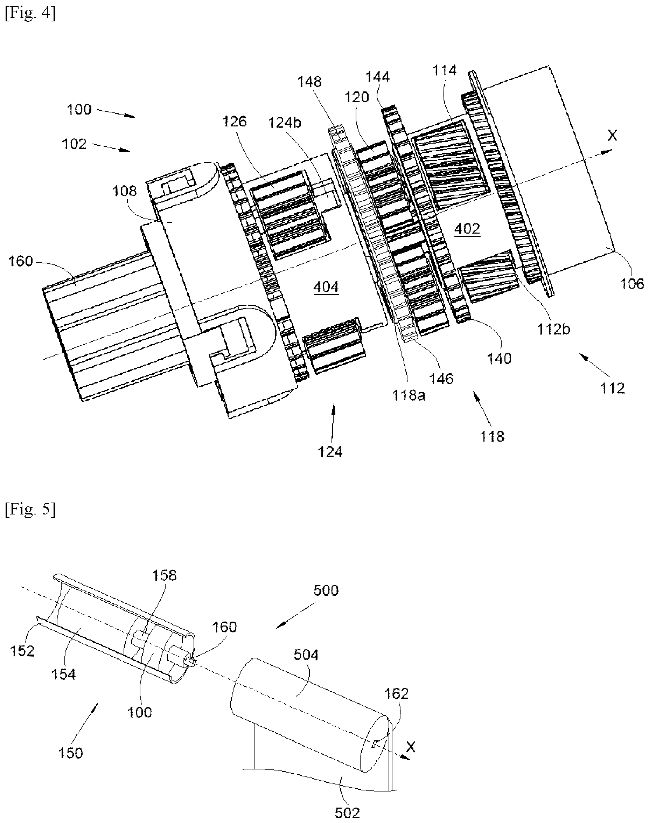

La Fig. 5 montre un système occultant 500 qui prend ici la forme d'un volet roulant.

Le système occultant 500 comprend un tablier 502, un tube d'enroulement 504 autour duquel le tablier 502 s'enroule, et un moteur tubulaire 150 logé dans le tube d'enroulement 504 et qui comprend un tube moteur 152, un moteur 154 et un système réducteur 100 selon l'invention. Le moteur 154 et le système réducteur 100 sont logés fixes dans le tube moteur 152 qui est monté fixe par exemple sur la structure d'un bâtiment.

Le moteur 154 présente un arbre moteur 158.

Le système réducteur 100 comporte un arbre de sortie 160 qui constitue une prise de force prévue pour entraîner en rotation le tube d'enroulement 504. Le système réducteur 100 comporte un coupleur qui coopère avec l'arbre moteur 158 et qui est entraîné en rotation par ce dernier.

L'arbre moteur 158 et l'arbre de sortie 160 sont coaxiaux avec un axe longitudinal X atour duquel les différents éléments sont en rotation.

Dans le mode de réalisation de l'invention présenté sur la Fig. 5, l'arbre de sortie 160 présente une forme rectangulaire et le tube d'enroulement 504 comprend un trou 162 qui est ici rectangulaire et qui reçoit l'arbre de sortie 160. Ainsi, la rotation de l'arbre de sortie 160 entraîne la rotation du tube d'enroulement 504 dans un sens ou dans l'autre pour monter ou descendre le tablier 502. Bien sûr l'arbre de sortie 160 et le trou 162 peuvent prendre d'autres formes.

Dans le cas d'un volet, le tablier 502 prend classiquement la forme de lattes.

Le système occultant 500 pourrait prendre une autre forme comme par exemple un store banne et le tablier serait alors constitué d'une toile.

Un ensemble motorisé selon l'invention comporte le moteur 154 et le système réducteur 100 selon l'invention.

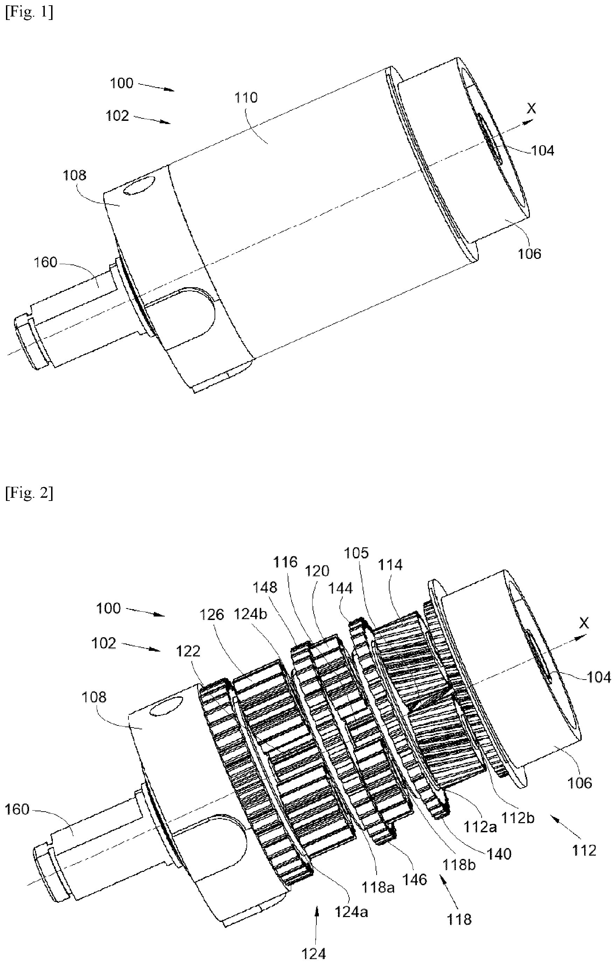

La Fig. 1 montre le système réducteur 100 qui comprend un corps 102 prenant ici une forme cylindrique autour de l'axe longitudinal X et qui porte ici un coupleur 104 qui est à une extrémité du corps 102 pour se connecter à l'arbre moteur 158 et l'arbre de sortie 160 qui est à une autre extrémité du corps 102. Le corps 102 est fixé dans le tube moteur 152 par exemple par des vis, des goupilles ou tous moyens de fixation. Le coupleur 104 et l'arbre de sortie 160 sont montés mobiles en rotation par rapport au corps 102 autour de l'axe longitudinal X.

Le corps 102 comporte ici une première embase 106 autour du coupleur 104, une deuxième embase 108 autour de l'arbre de sortie 160 et un fût 110 fixé entre les deux embases 106 et 108. Les différents éléments du système réducteur 100 décrit ci-dessous sont disposés à l'intérieur du corps 102.

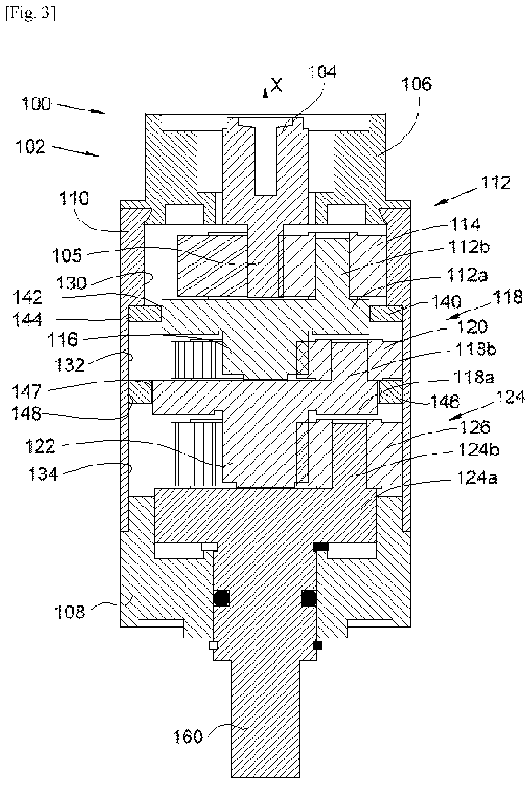

La Fig. 2 montre le système réducteur 100 selon un premier mode de réalisation de l'invention sans le fût 110, et la Fig. 3 montre une coupe axiale selon l'axe longitudinal X du système réducteur 100.

Le coupleur 104 est monté mobile en rotation autour de l'axe longitudinal X à l'intérieur de la première embase 106. Le coupleur 104 comporte un pignon planétaire d'entrée 105 coaxial avec l'axe longitudinal X et en particulier, ici, un pignon à denture hélicoïdale.

Le système réducteur 100 comporte un premier porte-satellites 112 qui porte une pluralité de premiers satellites 114 (ici au nombre de trois) répartis autour du pignon planétaire d'entrée 105 et chacun engrène avec le pignon planétaire d'entrée 105. Chaque premier satellite 114 présente un axe de rotation parallèle à l'axe longitudinal X mais distinct. Pour engrener avec le pignon planétaire d'entrée 105, chaque premier satellite 114 présente ici une denture hélicoïdale mais il peut présenter une denture droite, en particulier décalée.

Pour la mise en position des premiers satellites 114, le premier porte-satellites 112 prend la forme d'un premier plateau circulaire 112a coaxial avec l'axe longitudinal X et sur lequel, pour chaque premier satellite 114, est fixé un premier plot 112b sur lequel s'emmanche ledit premier satellite 114 et coaxial avec lui.

Du côté opposé aux premiers plots 112b, c'est-à-dire de l'autre côté du premier plateau circulaire 112a, le premier porte-satellites 112 présente un pignon planétaire intermédiaire 116 coaxial avec l'axe longitudinal X et en particulier, ici, un pignon à denture droite.

Le système réducteur 100 comporte un deuxième porte-satellites 118 qui porte une pluralité de deuxièmes satellites 120 (ici au nombre de trois) répartis autour du pignon planétaire intermédiaire 116 et chacun engrène avec le pignon planétaire intermédiaire 116. Chaque deuxième satellite 120 présente un axe de rotation parallèle à l'axe longitudinal X mais distinct. Pour engrener avec le pignon planétaire intermédiaire 116, chaque deuxième satellite 120 présente ici une denture droite.

Pour la mise en position des deuxièmes satellites 120, le deuxième porte-satellites 118 prend la forme d'un deuxième plateau circulaire 118a coaxial avec l'axe longitudinal X et sur lequel, pour chaque deuxième satellite 120, est fixé un deuxième plot 118b sur lequel s'emmanche ledit deuxième satellite 120.

Du côté opposé aux deuxièmes plots 118b, c'est-à-dire de l'autre côté du deuxième plateau circulaire 118a, le deuxième porte-satellites 118 présente un pignon planétaire de sortie 122 coaxial avec l'axe longitudinal X et en particulier, ici, un pignon à denture droite.

Le système réducteur 100 comporte un troisième porte-satellites 124 qui porte une pluralité de troisièmes satellites 126 (ici au nombre de trois) répartis autour du pignon planétaire de sortie 122 et chacun engrène avec le pignon planétaire de sortie 122. Chaque troisième satellite 126 présente un axe de rotation parallèle à l'axe longitudinal X mais distinct. Pour engrener avec le pignon planétaire de sortie 122, chaque troisième satellite 126 présente ici une denture droite.

Pour la mise en position des troisièmes satellites 126, le troisième porte-satellites 124 prend la forme d'un troisième plateau circulaire 124a coaxial avec l'axe longitudinal X et sur lequel, pour chaque troisième satellite 126, est fixé un troisième plot 124b sur lequel s'emmanche ledit troisième satellite 126.

Du côté opposé aux troisièmes plots 124b, c'est-à-dire de l'autre côté du troisième plateau circulaire 124a, le troisième porte-satellites 124 est solidaire de l'arbre de sortie 160 qui est monté mobile en rotation autour de l'axe longitudinal X à l'intérieur de la deuxième embase 108.

Le fût 110 présente une face intérieure et afin de compléter les différents trains épicycloïdaux, cette face intérieure présente des dents qui engrènent avec les différents satellites 114, 120 et 126. La face intérieure constitue ainsi, pour chaque train épicycloïdal, une couronne planétaire. Il y a ainsi des premières dents 130 qui engrènent avec les premiers satellites 114 et qui présentent ici une denture hélicoïdale, des deuxièmes dents 132 qui engrènent avec les deuxièmes satellites 120 et qui présentent ici une denture droite, et des troisièmes dents 134 qui engrènent avec les troisièmes satellites 126 et qui présentent ici une denture droite.

Le système réducteur 100 comporte ainsi un premier train épicycloïdal qui comporte le pignon planétaire d'entrée 105 solidaire du coupleur 104, le premier porte-satellites 112 sous la forme du premier plateau circulaire 112a sur lequel sont montés mobiles en rotation la pluralité de premiers satellites 114 et les premières dents 130 qui engrènent avec les premiers satellites 114 et qui sont disposées sur la face intérieure du fût 110 qui constitue une couronne planétaire.

Le système réducteur 100 comporte ainsi un deuxième train épicycloïdal comportant le pignon planétaire intermédiaire 116 solidaire du premier porte-satellites 112, le deuxième porte-satellites 118 sous la forme du deuxième plateau circulaire 118a sur lequel sont montés mobiles en rotation la pluralité de deuxièmes satellites 120, et les deuxièmes dents 132 qui engrènent avec les deuxièmes satellites 120 et qui sont disposées sur la face intérieure du fût 110 qui constitue une couronne planétaire.

Le système réducteur 100 comporte ainsi un troisième train épicycloïdal comportant le pignon planétaire de sortie 122 solidaire du deuxième porte-satellites 118, le troisième porte-satellites 124 sur lequel sont montés mobiles en rotation la pluralité de troisièmes satellites 126, et les troisièmes dents 134 qui engrènent avec les troisièmes satellites 126 et qui sont disposées sur la face intérieure du fût 110 qui constitue une couronne planétaire.

Ainsi, lorsque le moteur 154 tourne, l'arbre moteur 158 entraîne en rotation le coupleur 104, qui par cascade entraîne les différents trains épicycloïdaux jusqu'à l'arbre de sortie 160 qui entraîne le tube d'enroulement 504 en rotation.

Pour limiter les vibrations du premier porte-satellites 112 et donc limiter les bruits induits, le système réducteur 100 comporte une première bague dentée 140 qui est disposée autour du premier plateau circulaire 112a. À cette fin, la première bague dentée 140 présente un trou central 142 dans lequel s'emmanche le premier plateau circulaire 112a et comporte des dents 144 qui sont sur la périphérie extérieure de la première bague dentée 140 et qui coopèrent avec les deuxièmes dents 132 pour bloquer toute rotation de la première bague dentée 140.

Pour autoriser la rotation du premier plateau circulaire 112a par rapport à la première bague dentée 140 tout en limitant les vibrations dudit premier plateau circulaire 112a, le diamètre extérieur du premier plateau circulaire 112a et le diamètre du trou central 142 de la première bague dentée 140 présente un ajustement du type à jeu faible.

La mise en place de la première bague dentée 140 réduit de manière significative les bruits en stabilisant le premier plateau circulaire 112a qui est soumis à la rotation du moteur 154.

Le positionnement longitudinal le long de l'axe longitudinal X de la première bague dentée 140 est assuré ici, d'un côté, par sa mise en butée contre un épaulement créé entre les premières dents 130 et les deuxièmes dents 132, et de l'autre côté, par sa mise en butée contre les deuxièmes satellites 120. La première bague dentée 140 peut ainsi se déplacer entre ces deux butées.

Pour limiter les vibrations du deuxième porte-satellites 118 et donc limiter les bruits induits, le système réducteur 100 comporte une deuxième bague dentée 146 qui est disposée autour du deuxième plateau circulaire 118a. À cette fin, la deuxième bague dentée 146 présente un trou central 147 dans lequel s'emmanche le deuxième plateau circulaire 118a et comporte des dents 148 qui sont sur la périphérie extérieure de la deuxième bague dentée 146 et qui coopèrent avec les deuxièmes dents 132 ou les troisièmes dents 134 pour bloquer toute rotation de la deuxième bague dentée 146. Selon où s'arrêtera les deuxièmes dents 132 et les troisièmes dents 134 par rapport à la deuxième bague dentée 146, les dents 148 de la deuxième bague dentée 146 coopéreront avec les unes ou les autres.

Pour autoriser la rotation du deuxième plateau circulaire 118a par rapport à la deuxième bague dentée 146 tout en limitant les vibrations dudit deuxième plateau circulaire 118a, le diamètre extérieur du deuxième plateau circulaire 118a et le diamètre du trou central 147 de la deuxième bague dentée 146 présentent un ajustement du type à jeu faible.

La mise en place de la deuxième bague dentée 146 améliore la réduction des bruits en stabilisant le deuxième plateau circulaire 118a.

La mise en place des bagues dentées 140 et 146 permet de créer un guidage par friction entre la bague dentée 140, 146 et le plateau circulaire 112a, 118a associé. Chaque pignon des plateaux circulaires 112a et 118a est ainsi soumis à un couple de traînée qui met le pignon en contrainte et empêche les bruits parasites dus au flottement du pignon.

Le positionnement longitudinal le long de l'axe longitudinal X de la deuxième bague dentée 146 est assuré ici, d'un côté, par sa mise en butée contre les deuxièmes satellites 120, et de l'autre côté, par sa mise en butée contre les deuxièmes satellites 120 et les troisième satellites 126. La deuxième bague dentée 146 peut ainsi se déplacer entre ces deux butées.

Dans le deuxième mode de réalisation de l'invention représenté à la Fig. 4, le premier porte-satellites 112 comporte une cage 402 solidaire du premier plateau circulaire 112a. Dans ce mode de réalisation, chaque premier satellite 114 est solidaire de son plot 112b et cet ensemble est monté mobile en rotation par rapport au premier plateau circulaire 112a dans ladite cage 402 et est flottant. Un tel arrangement permet de corriger des éventuels problèmes de parallélisme entre le tube d'enroulement 504 et l'arbre moteur 158. Un pignon est flottant lorsqu'il peut se déplacer radialement par rapport à l'axe longitudinal X.

Dans le mode de réalisation de l'invention présenté à la Fig. 4, le même arrangement est également réalisé pour le troisième porte-satellites 124 qui comporte une cage 404.

Même si, dans le mode de réalisation de l'invention présenté à la Fig. 4, cet arrangement n'a pas été réalisé pour le deuxième porte-satellites 118, il peut être repris.

## Revendications

1. Système réducteur (100) comportant :
- un corps (102) présentant un axe longitudinal (X) avec, à une première extrémité, un coupleur (104) destiné à être connecté à un arbre moteur (158) d'un moteur (154), et, à une deuxième extrémité, un arbre de sortie (160), où le coupleur (104) et l'arbre de sortie (160) sont montés mobiles en rotation par rapport au corps (102) autour de l'axe longitudinal (X), où le corps (102) comporte un fût (110) avec une face intérieure,
- un premier train épicycloïdal comportant un pignon planétaire d'entrée (105) solidaire du coupleur (104), un premier porte-satellites (112) sous la forme d'un premier plateau circulaire (112a) sur lequel sont montés mobiles en rotation une pluralité de premiers satellites (114) où chacun engrène avec le pignon planétaire d'entrée (105), et des premières dents (130) qui engrènent avec les premiers satellites (114) et qui sont disposées sur la face intérieure du fût (110) qui constitue une couronne planétaire,
- un deuxième train épicycloïdal comportant un pignon planétaire intermédiaire (116) solidaire du premier porte-satellites (112), un deuxième porte-satellites (118) sous la forme d'un deuxième plateau circulaire (118a) sur lequel sont montés mobiles en rotation une pluralité de deuxièmes satellites (120) où chacun engrène avec le pignon planétaire intermédiaire (116), et des deuxièmes dents (132) qui engrènent avec les deuxièmes satellites (120) et qui sont disposées sur la face intérieure du fût (110) qui constitue une couronne planétaire, et
- un troisième train épicycloïdal comportant un pignon planétaire de sortie (122) solidaire du deuxième porte-satellites (118), un troisième porte-satellites (124) sur lequel sont montés mobiles en rotation une pluralité de troisièmes satellites (126) où chacun engrène avec le pignon planétaire de sortie (122), et des troisièmes dents (134) qui engrènent avec les troisièmes satellites (126) et qui sont disposées sur la face intérieure du fût (110) qui constitue une couronne planétaire, où l'arbre de sortie (160) est solidaire du troisième porte-satellites (124),
le système réducteur (100) étant **caractérisé en ce qu'**il comporte une première bague dentée (140) présentant un trou central (142) dans lequel s'emmanche le premier plateau circulaire (112a), comportant, sur la périphérie extérieure de la première bague dentée (140), des dents (144) qui coopèrent avec les deuxièmes dents (132).

2. Système réducteur (100) selon la revendication 1, **caractérisé en ce qu'**il comporte une deuxième bague dentée (146) présentant un trou central (147) dans lequel s'emmanche le deuxième plateau circulaire (118a) et comportant, sur la périphérie extérieure de la deuxième bague dentée (146), des dents (148) qui coopèrent avec les deuxièmes dents (132) ou les troisièmes dents (134).

3. Système réducteur (100) selon l'une des revendications 1 ou 2, **caractérisé en ce que** le diamètre extérieur de chaque plateau circulaire (112a, 118a) et le diamètre du trou central (142, 147) de la bague dentée (140, 146) associée présentent un ajustement avec jeu.

4. Système réducteur (100) selon l'une des revendications 1 à 3, **caractérisé en ce qu'**au moins un des portes-satellites (112, 118, 124) comporte une cage (402, 404), **en ce que** chaque satellite (114, 120, 126) est solidaire d'un plot (112b, 118b, 124b) coaxial avec ledit satellite (114, 120, 126), et **en ce que** chaque satellite (114, 120, 126) et son plot (112b, 118b, 124b) sont montés mobiles en rotation et flottant dans la cage (402, 404).

5. Ensemble motorisé comportant un moteur (154) avec un arbre moteur (158) et un système réducteur (100) selon l'une des revendications précédentes, où l'arbre moteur (158) est connecté au coupleur (104) et l'entraîne en rotation.

6. Système occultant (500) comportant un tablier (502), un tube d'enroulement (504) autour duquel le tablier (502) s'enroule, un moteur tubulaire (150) logé dans le tube d'enroulement (504) et qui comprend un tube moteur (152) et un ensemble motorisé selon la revendication 5 logé dans le tube moteur (152), et où l'arbre de sortie (160) entraîne le tube d'enroulement (504) en rotation.

## Patentansprüche

1. Untersetzungsgetriebe (100), das Folgendes aufweist:
- einen Körper (102) mit einer Längsachse (X), der an einem ersten Ende eine Kupplung (104), die mit einer Antriebswelle (158) eines Motors (154) verbunden werden soll, und an einem zweiten Ende eine Abtriebswelle (160) aufweist, wobei die Kupplung (104) und die Abtriebswelle (160) in Bezug auf den Körper (102) um die Längsachse (X) drehbar angebracht sind, wobei der Körper (102) einen Schaft (110) mit einer Innenfläche aufweist,
- ein erstes Planetengetriebe mit einem Eingangsplanetenrad (105), das fest mit der Kupplung (104) verbunden ist, einem ersten Planetenträger (112) in Form einer ersten kreisförmigen Platte (112a), auf dem eine Vielzahl von ersten Planetenrädern (114) drehbeweglich angebracht sind, wobei jedes in das Eingangsplanetenrad (105) eingreift, und ersten Zähnen (130), die in die ersten Planetenräder (114) eingreifen und die auf der Innenseite des Schafts (110) angeordnet sind, der ein Hohlrad bildet,
- ein zweites Planetengetriebe mit einem Zwischenplanetenrad (116), das fest mit dem ersten Planetenträger (112) verbunden ist, einem zweiten Planetenträger (118) in Form einer zweiten kreisförmigen Platte (118a), auf dem eine Vielzahl von zweiten Planetenrädern (120) drehbeweglich angebracht sind, wobei jedes in das Zwischenplanetenrad (116) eingreift, und zweiten Zähnen (132), die in die zweiten Planetenräder (120) eingreifen und die auf der Innenseite des Schafts (110) angeordnet sind, der ein Hohlrad bildet, und
- ein drittes Planetengetriebe mit einem Ausgangsplanetenrad (122), das fest mit dem zweiten Planetenträger (118) verbunden ist, einem dritten Planetenträger (124), auf dem eine Vielzahl von dritten Planetenrädern (126) drehbeweglich angebracht sind, wobei jedes in das Ausgangsplanetenrad (122) eingreift, und dritten Zähnen (134), die in die dritten Planetenräder (126) eingreifen und die auf der Innenseite des Schafts (110) angeordnet sind, der ein Hohlrad bildet, wobei die Abtriebswelle (160) fest mit dem dritten Planetenträger (124) verbunden ist,
wobei das Untersetzungsgetriebe (100) **dadurch gekennzeichnet ist, dass** es einen ersten gezahnten Ring (140) aufweist, der ein zentrales Loch (142) aufweist, in das die erste kreisförmige Platte (112a) eingepasst wird, und am Außenumfang des ersten gezahnten Rings (140) Zähne (144) aufweist, die mit den zweiten Zähnen (132) zusammenwirken.

2. Untersetzungsgetriebe (100) nach Anspruch 1, **dadurch gekennzeichnet, dass** es einen zweiten gezahnten Ring (146) aufweist, der ein zentrales Loch (147) aufweist, in das die zweite kreisförmige Platte (118a) eingepasst wird, und am Außenumfang des zweiten gezahnten Rings (146) Zähne (148) aufweist, die mit den zweiten Zähnen (132) oder den dritten Zähnen (134) zusammenwirken.

3. Untersetzungsgetriebe (100) nach einem der Ansprüche 1 oder 2, **dadurch gekennzeichnet, dass** der Außendurchmesser jeder kreisförmigen Platte (112a, 118a) und der Durchmesser des zentralen Lochs (142, 147) des zugehörigen gezahnten Rings (140, 146) eine Spielpassung aufweisen.

4. Untersetzungsgetriebe (100) nach einem der Ansprüche 1 bis 3, **dadurch gekennzeichnet, dass** mindestens einer der Planetenträger (112, 118, 124) einen Käfig (402, 404) aufweist, und dass jedes Planetenrad (114, 120, 126) fest mit einem Klotz (112b, 118b, 124b) koaxial zu dem Planetenrad (114, 120, 126) verbunden ist, und dass jedes Planetenrad (114, 120, 126) und sein Klotz (112b, 118b, 124b) drehbeweglich und schwebend in dem Käfig (402, 404) montiert sind.

5. Motorisierte Baugruppe mit einem Motor (154) mit einer Antriebswelle (158) und einem Untersetzungsgetriebe (100) nach einem der vorhergehenden Ansprüche, wobei die Antriebswelle (158) mit der Kupplung (104) verbunden ist und diese in Drehung versetzt.

6. Verdunkelungssystem (500) mit einer Schürze (502), einem Wickelrohr (504), um das die Schürze (502) gewickelt wird, einem Rohrmotor (150), der in dem Wickelrohr (504) untergebracht ist und der ein Motorrohr (152) und eine motorisierte Baugruppe nach Anspruch 5 aufweist, die in dem Motorrohr (152) untergebracht ist, wobei die Abtriebswelle (160) das Wickelrohr (504) drehend antreibt.

## Claims

1. Reduction gear system (100) comprising:
- a body (102) having a longitudinal axis (X) with, at a first end, a coupler (104) intended to be connected to a motor shaft (158) of a motor (154), and, at a second end, an output shaft (160), in which the coupler (104) and the output shaft (160) are mounted to be movable in rotation with respect to the body (102) about the longitudinal axis (X), in which the body (102) comprises a drum (110) with an inner face,
- a first epicyclic gear train comprising an input planet gear (105) integral to the coupler (104), a first planet gear carrier (112) in the form of a first circular plate (112a) on which a plurality of first planet gears (114) are mounted to be movable in rotation, in which each meshes with the input planet gear (105), and first teeth (130) which mesh with the first planet gears (114) and which are disposed on the inner face of the drum (110) which constitutes a planet gear crown ring,
- a second epicyclic gear train comprising an intermediate planet gear (116) integral to the first planet gear carrier (112), a second planet gear carrier (118) in the form of a second circular plate (118a) on which a plurality of second planet gears (120) are mounted to be movable in rotation, in which each meshes with the intermediate planet gear (116), and second teeth (132) which mesh with the second planet gears (120) and which are disposed on the inner face of the drum (110) which constitutes a planet gear crown ring, and
- a third epicyclic gear train comprising an output planet gear (122) integral to the second planet gear carrier (118), a third planet gear carrier (124) on which a plurality of third planet gears (126) are mounted to be movable in rotation, in which each meshes with the output planet gear (122), and third teeth (134) which mesh with the third planet gears (126) and which are disposed on the inner face of the drum (110) which constitutes a planet gear crown ring, in which the output shaft (160) is integral to the third planet gear carrier (124),
the reduction gear system (100) being **characterized in that** it comprises a first toothed ring (140) having a central hole (142) in which is fitted the first circular plate (112a), comprising, on the outer periphery of the first toothed ring (140), teeth (144) which cooperate with the second teeth (132).

2. Reduction gear system (100) according to Claim 1, **characterized in that** it comprises a second toothed ring (146) having a central hole (147) in which is fitted the second circular plate (118a) and comprising, on the outer periphery of the second toothed ring (146), teeth (148) which cooperate with the second teeth (132) or the third teeth (134).

3. Reduction gear system (100) according to one of Claims 1 and 2, **characterized in that** the outer diameter of each circular plate (112a, 118a) and the diameter of the central hole (142, 147) of the associated toothed ring (140, 146) have a fit with play.

4. Reduction gear system (100) according to one of Claims 1 to 3, **characterized in that** at least one of the planet gear carriers (112, 118, 124) comprises a cage (402, 404), **in that** each planet gear (114, 120, 126) is integral to a mounting (112b, 118b, 124b) coaxial with said planet gear (114, 120, 126), and **in that** each planet gear (114, 120, 126) and its mounting (112b, 118b, 124b) are mounted to be movable in rotation and floating in the cage (402, 404).

5. Motorized assembly comprising a motor (154) with a motor shaft (158) and a reduction gear system (100) according to one of the preceding claims, in which the motor shaft (158) is connected to the coupler (104) and drives it in rotation.

6. Shade system (500) comprising an apron (502), a winding tube (504) around which the apron (502) is wound, a tubular motor (150) housed in the winding tube (504) and which comprises a motor tube (152) and a motorized assembly according to Claim 5 housed in the motor tube (152), and in which the output shaft (160) drives the winding tube (504) in rotation.
